# EUROPEAN PATENT APPLICATION

(11) **EP 4 336 423 A1**
(43) Date of publication of application: **13.03.2024**
(21) Application number: 22194896.1
(22) Date of filing: 09.09.2022
(51) Int. Cl.: G06Q 10/04

(54) **AUTOMATED SYSTEM AND METHOD FOR MANAGEMENT OF PACK ARRANGEMENT OPERATIONS**

(71) Applicant: Sidel Participations, 76930 Octeville-sur-Mer (FR)
(72) Inventor: LANZI, Mauro, 43126 PARMA (IT); ARGENTI, Mauro, 43126 PARMA (IT)
(74) Representative: Sidel Group

(57) **Abstract**

An automated system (40) for management of pack-arrangement operations in a pack-arrangement station (10) of a container packaging plant, having a processing unit (41) and a user interface stage (43), the processing unit (41) having: a first functional module (41a), to assist an operator, via the user interface stage (43), in the generation of a new pack-arrangement pattern to be implemented in the pack-arrangement station (10); and a second functional module (41b), to implement a virtual simulation of the operation of the pack-arrangement station (10), in order to verify the feasibility in the pack-arrangement station (10) of the new pack-arrangement pattern received from the first functional module (41a) and to automatically determine a set-up of the pack-arrangement station (10) corresponding to the new pack-arrangement pattern.

## Description

The present invention relates to an automated system and method for management of pack arrangement operations, in particular for a container processing plant.

In general, the present solution may be implemented in plants for processing any type of containers, such as bottles (or other kinds of containers) made of glass, plastic (PET), aluminum, steel and composite materials, that are to be filled with any type of pourable product, including sparkling liquids, such as sparkling water, non-alcoholic beverages and beer; noneffervescent liquids, such as natural water, juices, tea, integrators for sport activities and wine; and liquid detergents, emulsions, suspensions, or high-viscosity liquids.

The present solution may be applied with any type of packages and packs, such as cartons, boxes, etc. in any field of application, such as food, home and personal care.

A plant for processing containers comprises a number of container processing machines arranged so as to form a processing line; these container processing machines may include a forming machine, for example a blower, a filling machine, a capping machine, a labelling machine, a sterilizing machine, and, at the end of the line, a palletizing station, where pack arrangement operations are performed to orderly arrange pack of containers on a pallet.

As it is known, a pallet is a transport structure defining a flat base adapted to stably support groups of loading or packaging units (packs), possibly arranged in a plurality of overlapped layers. In view of their subsequent handling or storage, the packs are typically positioned in an orderly and stable way on the pallet and fixed to each other and/or to the pallet, for example by wrapping in a film of thermoplastic material.

For the purpose of convenience of handling and of the optimized use of available spaces, it is preferred that the arrangement of the packs on pallets is such as to maximize the density (i.e. the number of items per unit area) and compactness (which results, in general, in stability in the handling operations) of the resulting load.

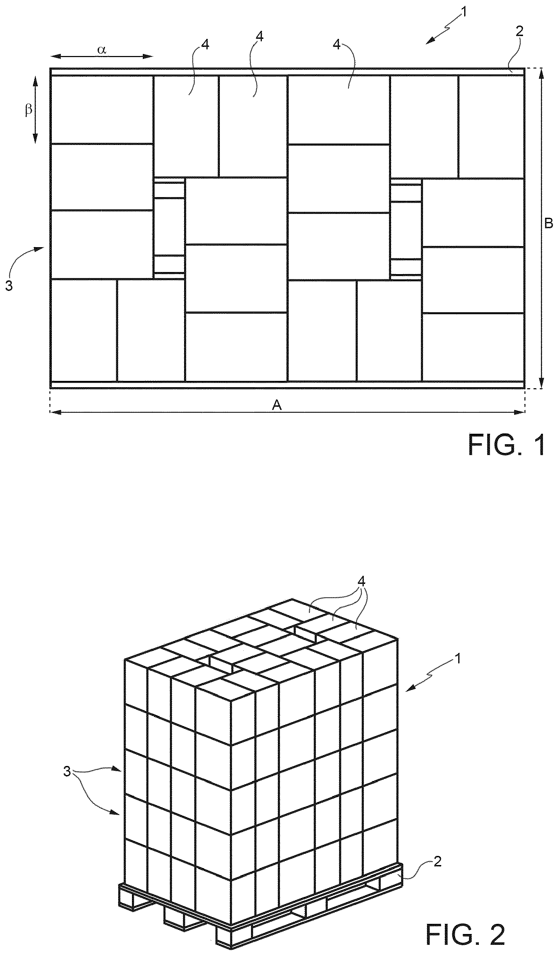

By way of example, Figures 1 and 2 show schematically, respectively in a top view and in a perspective view, a loading group 1 having, as structural base, a rectangular pallet 2, with greater dimension A and lesser dimension B.

The loading group 1 comprises a plurality of overlapped layers 3, each of which comprises a respective plurality of packs 4 grouped and orderly arranged; for example, in a manner not shown in detail, each pack 4 may consist in a packaging of a desired number of bottles or similar containers.

In the example shown, the packs 4 have a substantially rectangular shape, with greater dimension α and lesser dimension β. The dimensions A and B of the pallets may not be exact multiples of dimensions α and β; however, it is possible to identify, with geometrical considerations, at least one linear combination of α and β for which A is approximately equal to m·α + n·β and B is approximately equal to m'·α + n'·β, and which allows the maximum exploitation of space.

In a possible example, the overlapped layers 3 of the loading group 1 may be constituted by the stacked repetition of a first and a second layers 3 having different patterns, in a "crossed" configuration.

In more details, at the palletizing station, the packs, carried on conveyors (conveyor belts), are grouped and ordered in overlapping layers to form loading groups on pallets.

The palletizing station generally comprises: a sorting station, which receives the packs from a conveyor belt and has one or more actuators and handling modules adapted to rotate and arrange in a desired way the same packs according to a predetermined algorithm, so as to form a load layer having optimized conformation; and a storage station, that receives the ordered layer and has one or more respective actuators and handling modules adapted to transfer the same layer on a pallet for forming, layer by layer, a corresponding loading group.

The operations of the palletizing station are controlled by an operator panel, provided with an user interface (HMI - Human Machine Interface) comprising suitable data input and display means, and with a control unit, comprising a PLC (Programmable Logic Controller) or a PC provided with a so-called "soft PLC", and adapted to interface with the various actuators and handling modules of the sorting and storage stations.

Expert personnel attending to the formation of the loading groups on pallets use more or less complex algorithms of geometric ordering to define the configuration of the layers, so as to achieve the above mentioned objectives of density and compactness.

Especially in product sectors wherein market requirements impose high productivity, a high number of packs is fed to a palletizing station, and the packs may have different sizes and configurations, depending on the demands of customers or markets; in addition, the size of the pallets upon which the loading groups are arranged may also be different, again depending on customers or specialized market requests.

As a result, reconfiguration of the palletizing station (so-called "change format" operation) is quite often requested, and its operating parameters have to be adjusted and optimized as a function of the characteristics of the packs to be ordered and loaded, and of the characteristics of the pallets on which they have to be arranged.

To this end, the intervention is required of expert operators, who, through the operator panel, have to reprogram the PLC controller of the palletizing station.

Such change-format operations in general require a significant amount of time, during which the arrest of the line occurs, and are obviously not free from errors, for example in the case where the operator performing the reprogramming is not informed of changes that may have occurred in operating parameters of the same palletizing station.

Reconfiguration of the pack-arrangement operations should also take into account several other parameters, like the speed of the conveyors, the choice of the handling modules to handle the packs and so on.

In the past, some automated systems have been proposed to assist an operator in managing at least some of the palletizing operations.

However the need is surely felt for an improved system for the automated management of pack arrangement operations.

The aim of the present invention is therefore to satisfy, at least in part, such need.

The above aim is achieved by the present invention, as it relates to an automated system and method, as defined in the appended claims.

For a better understanding of the present invention, a preferred embodiment will now be described, purely by way of non-limiting example and with reference to the accompanying drawings, wherein:
- Figures 1 and 2 schematically show, respectively in plan view and in perspective view, a loading group arranged on a pallet;
- Figure 3 shows schematically a view of an end-of-line pack-arrangement station;
- Figure 4 shows a schematic block diagram of an automated system for management of pack arrangement operations;
- Figure 5 shows a schematic block diagram of a processing unit in the automated system of Figure 4;
- Figure 6 shows a general flowchart of operations performed by a first functional module of the processing unit of Figure 5;
- Figures 7A-7B show examples of screens displayed on a display of a user interface of the automated system of Figure 4;
- Figure 8 shows a general flowchart of operations performed by a second functional module of the processing unit of Figure 5;
- Figure 9 show an exemplary simulation of the operation of the automated system of Figure 4.

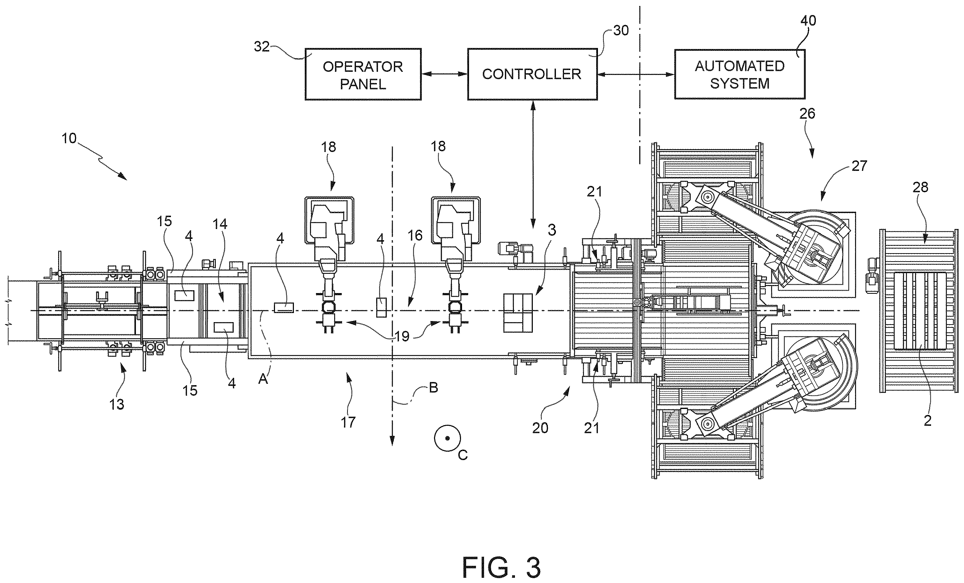

Figure 3 shows an example embodiment of a pack-arrangement station, indicated as a whole with 10, in particular being a palletizing station.

In the example, the pack-arrangement station 10 constitutes the end-of-line station of a packaging plant (not shown herein), of the type possibly comprising: a washing/rinsing station for treating containers, for example, cardboard, glass or plastic containers; a filling station for filling the containers with a pourable product (for example a food product); a capping station for the application of respective caps to the containers; and a grouping station for constituting loading units consisting of groups of containers, properly grouped and packaged (in packs of a desired number of elements, again denoted with 4).

With reference to an advancement direction of the containers inside the packaging plant, the pack-arrangement station 10 is located downstream of the abovementioned filling, capping and grouping stations.

In detail, the pack-arrangement station 10 comprises, arranged in a cascade configuration along the advancement direction of the packs 4:
- a receiving station 13, which is fed with the packs 4 arranged in one or more parallel lines, separated and laterally contained by guides 15, the packs 4 advancing on a first conveyor 14, for example consisting of a conveyor belt, along an axis A;
- a second conveyor 16, arranged downstream of the first conveyor 14, and possibly having a different advancing speed along the axis A;
- a handling station 17, having a plurality of handling modules 18 (two, in cascade, in the example shown), to order the packs 4 advancing on the second conveyor 16 according to a predetermined algorithm, each handling module 18 comprising for example a handling robot 19, capable of grasping a respective pack 4, and to move the same pack 4 along the axis A and along an axis B transverse to axis A and to rotate it about an axis C transverse to axes A and B, in order to position the pack 4, possibly rotated in a suitable manner, in a desired position on the second conveyor 16;
- an accumulation station 20, wherein the packs 4, that have previously been ordered, are compacted by way of compacting actuators 21, so as to form a layer 3 that will later form part of a loading group 1 on a pallet 2; and
- an output station 26, provided with one or more output handling modules 27, adapted to pick up the ordered layers of packs 4 and to carry them on a pallet 2 arranged on an output conveyor 28, possibly inserting any flaps or separator sheets (not shown) between the ordered layers of packs 4.

The pack-arrangement station 10 further comprises a controller 30, of a programmable logic type (PLC or soft PLC), shown schematically in Figure 3, connected to the various stations and modules of the pack-arrangement station 10 and configured to provide suitable control signals to manage operation thereof according to desired modes and algorithms, which have been previously programmed.

In particular, the controller 30 provides suitable commands to the handling robots 19, to implement a predetermined algorithm of layer formation with optimized density and compactness, by means of translations along axes A and B, and/or rotations about the axis C by a suitable angle, generally 90°, of the packs 4 moving on the second conveyor 16.

The pack-arrangement station 10 further comprises, coupled to the controller 30, an operator panel 32, which provides an operator with a suitable user interface, comprising a display and suitable data input elements, to display operational data related to operation of the pack-arrangement station 10 and to allow modification of operating parameters of the same pack-arrangement station 10.

Figure 3 also shows schematically an automated system 40 for managing pack-arrangement operations in the above discussed pack-arrangement station 10.

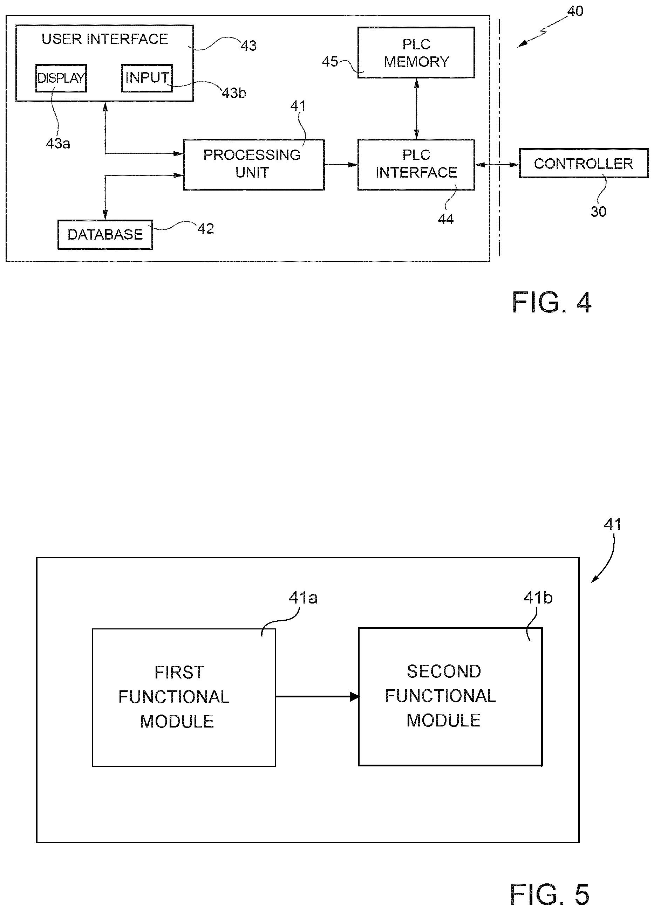

With reference to Figure 4, the automated system 40 is now described in more details.

The automated system 40 comprises: a processing unit 41, including a microprocessor, a microcontroller, or a similar processing tool; a database 42, coupled to the processing unit 41 and adapted to store data and information relating to the pack-arrangement operations and, in general, the pack-arrangement station 10 (e.g. parameters such as the speed of the conveyors and the characteristics of related motors); and a user interface stage 43.

The user interface stage 43 comprises: a display 43a, operable by the processing unit 41, following the execution of suitable software instructions, to present to an operator a graphical interface HMI (Human Machine Interface) to manage the pack-arrangement operations, in particular for the configuration of loading groups 1 on pallets 2 and possibly setting up of the pack-arrangement station 10, and data input elements 43b, for example a keyboard (physical or virtual), and/or a mouse, for inputting data by the same operator.

The automated system 40 further comprises: a PLC interface stage 44; and a PLC data memory 45.

The PLC interface stage 44 is configured to interface with the controller 30 of the pack-arrangement station 10, and in particular is operable by the processing unit 41, following the execution of suitable software instructions, for sending setup and configuration data to the controller 30, relating to an optimized configuration for the pack-arrangement operations, and possibly to receive, by the same controller 30, configuration update data, relative to current settings of the pack-arrangement station 10. The configuration data sent to the controller 30 may be stored in the PLC data memory 45, and may be updated according to the update data received by the controller 30.

In a possible embodiment, the automated system 40 is made separately from the operator panel 32, and the exchange of data and information between the processing unit 41 and the same controller 30 takes place in a wired or wireless way. In this case, the automated system 40 may also be located at a remote location with respect to the pack-arrangement station 10.

Alternatively, the automated system 40 may be integrated in the operator panel 32 of the pack-arrangement station 10, being for example arranged in the proximity of the controller 30.

As schematically shown in Figure 5, the processing unit 41 of the automated system 40 has a first functional module 41a, which is configured to assist the operator in pack-arrangement pattern creation or modification; and a second functional module 41b, which is configured to implement a virtual simulation of the pack-arrangement station 10, by means of a "digital twin" thereof, in order to verify the feasibility of the new pack-arrangement pattern generated by the first functional module 41a in the pack-arrangement station 10 and the associated performance and to determine an actual set-up of the pack-arrangement station 10.

The operation of the first functional module 41a implemented by the automated system 40 is now disclosed in more details, with reference to the case in which it is configured for aiding design and configuration of loading groups 1 on pallets 2.

The processing unit 41 of the automated system 40 controls displaying, by the user interface stage 43, of suitable data input masks and configuration parameter setting masks, in order to allow the operator to define desired characteristics for the formation of the loading groups 1 on pallets 2 (i.e. to define a desired pack-arrangement pattern).

The same processing unit 41 performs suitable consistency checks on the data entered by the operator and/or performs calculations and processing to identify an optimized configuration of the same loading groups 1, as a function of the entered data and of the current operational characteristics of the pack-arrangement station 10, which are kept updated by means of the PLC interface stage 44.

In this regard, at predetermined time intervals or at any execution of the first functional module 41a, the processing unit 41 may carry out a synchronization and alignment of the operating parameters of the pack-arrangement station 10 and of the data stored in the PLC data memory 45, in such a way that the processing unit 41 receives updated information on the current state of the pack-arrangement station 10. Such synchronization and alignment operation may take place in a way transparent to the operator.

In more details, the first functional module 41a performs software instructions and routines for displaying on the display 43a of the user interface stage 43 a certain number of screens for data entry and display of information, relative to the configuration of the loading groups 1 on pallets 2. The selections and the data entered by the operator by means of the input elements 43b are received by the processing unit 41, which may, in response to the received data, store information in the database 42 and/or retrieve information from the same database 42 and/or control the display of additional screens and information on the display 43a.

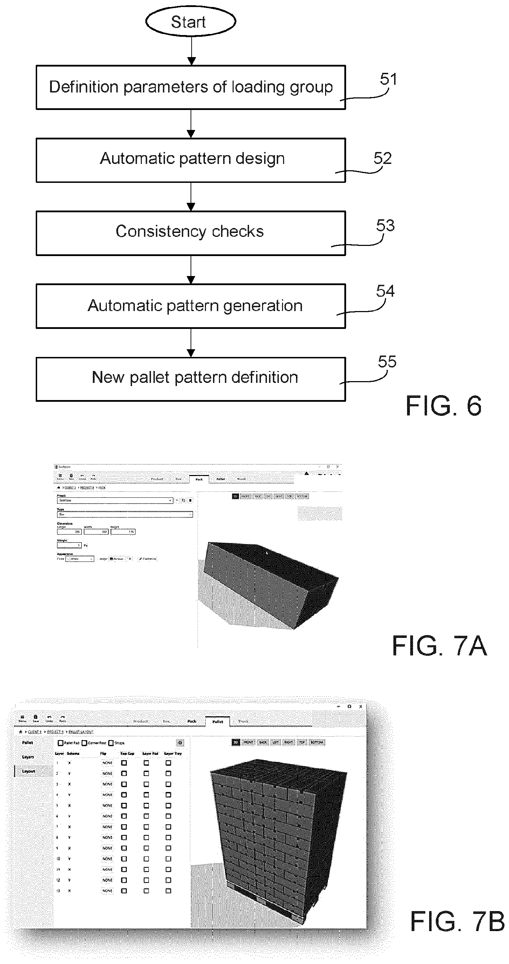

In more details, and referring also to Figure 6, the operations performed by the first functional module 41a include, in the disclosed embodiment, the definition of the characteristics of the pallets 2 and packs 4, as shown at block 51.

These characteristics may include:
- the type of pallet 2 to be used, for example defining the related standard, geometric data such as size, weight, etc..; advantageously, types of pallets 2 already present in the database 42 may be displayed, for the selection by the operator, or, alternatively, data entered relative to a new type of pallet 2, may be stored in the same database 42 for a later use;
- the desired palletizing scheme, for example relative to the number of layers, the reciprocal arrangement of the layers (columnar, crossed, etc.); also in this case, the palletizing scheme may possibly be imported from the database 42, in case of a preexisting scheme, or exported in the same database 42, following creation of a new scheme; and
- the characteristics of the packs 4, in terms of the constituent containers, the size (width, length, height, etc.), the appearance (presence and positioning of logos, etc).

By way of example, Figure 7A shows a screen on the display 43a, relating to the abovementioned procedure for entering configuration data, by which the operator is able to specify the characteristics of the packs 4 for the formation of loading groups 1 on pallets 2. It is evident that similar screens are presented for the selection and entry of additional configuration data by the operator.

The first functional module 41a then executes, as shown at block 52, appropriate instructions and software routines for the automatic pattern design, based on the input data.

In particular, the processing unit 41 performs an automated procedure for composition of layers 3, adapted to define the optimized composition of each layer 3 of the loading group 1, such as to optimize the density and compactness of the same loading group 1. For this purpose, the processing unit 41 carries out suitable geometric algorithms and subsequent processing, which lead to the definition of the optimal composition of layers 3 and of their stacked arrangement (e.g. crossed or columnar).

The processing unit 41 may also present to the operator on the display 43a of the user interface stage 43 a graphic tool for manual composition of the layers 3, which allows the operator to define step by step the structure of the loading group 1 or possibly to modify the pattern that is the result of the automatic configuration.

A further operation performed by the first functional module 41a, as shown at block 53, envisages suitable consistency checks to verify the correctness of the data and the stability of the pattern, moreover suggesting and/or carrying out suitable corrective measures.

The execution of the first functional module 41a thus leads, following the above checks, to automatic generation of the new pallet pattern, as shown at block 54 of the above Figure 6.

As shown at block 55, the full composition, or layout, of all the layers 3 of the loading group 1 is then defined, for the definition of the new pallet pattern to be implemented in the pack-arrangement station 10.

By way of example, Figure 7B depicts a screen shown on the display 43a, relating to a possible pallet pattern for the loading group 1, with highlighted the arrangement of the various constituent packs 4.

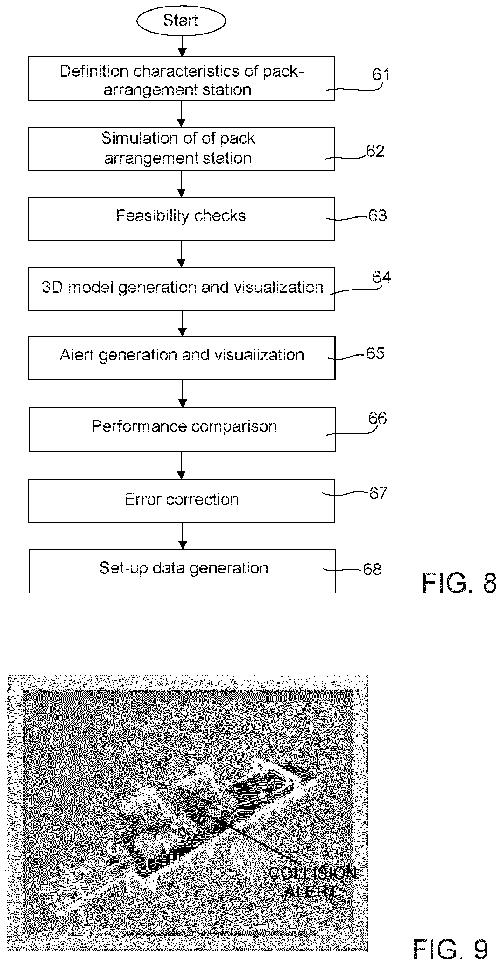

The general operation of the second functional module 41b, for simulating and setting up the pack-arrangement station 10 is now discussed in more details, with reference to Figure 8.

The second functional module 41b first performs, as shown at block 61, appropriate instructions and software routines for displaying on the display 43a a number of screens for data entry and display of information for the definition of the characteristics of the pack-arrangement station 10. These information include the parameters and general configuration of the pack-arrangement station 10, for example configuration parameters (size, number and type of actuators, etc.) and operating parameters (speed, feed rate, movements excursion, etc..) of the various constituent elements or modules; the number of feeding channels of the packs 4 to the first conveyor 14 at the receiving station 13; the type of feeding of the packs 4 to the various channels (synchronous, independent); the distance between the packs, etc..

Input of such data is typically executed only during a stage of designing of the pack-arrangement station 10, or in the event of changes being made to the same pack-arrangement station 10. The configuration information relating to the pack-arrangement station 10 may also be retrieved from database 42 and may not require intervention by the operator.

The second functional module 41b is then configured, as shown at block 62, to implement a complete simulation of the pack-arrangement station 10 and its operation for the formation of the new pack-arrangement pattern provided by the first functional module 41a.

The second functional module 41b is configured to generate a digital twin, i.e. a virtual copy, of the pack-arrangement station 10 and to simulate all the operations performed by the same pack-arrangement station 10 for the generation of the new pack-arrangement pattern, based on the characteristics of the same pack-arrangement pattern and the parameters and characteristic of the pack-arrangement station 10.

The simulated virtual twin mirrors and accurately reproduces the operation of the real pack-arrangement station 10, this having been verified at the design stage by comparing, between the simulated twin and the real machine, the time evolution of all main quantities and parameters relating to the pack arrangement operations, such as position, speed, acceleration, logic states, etc.

In particular, the second functional module 41b is configured to assign to each functional element of the pack-arrangement station 10 a dynamic working area, representative of the extent of movement of the same functional element during all the stages of the pack-arrangement operations.

During the simulation, as shown at block 63, the second functional module 41b performs a feasibility check on the new pack-arrangement pattern and identify possible problems and errors, which would not allow the formation of the same pack-arrangement pattern.

In particular, the second functional module 41b is configured to detect possible interference and/or collisions between functional elements of the pack-arrangement station 10, between packs 4 and/or between the same packs 4 and the functional elements of the same pack-arrangement station 10.

According to an aspect of the present solution, as shown at block 64, the second functional module 41b is configured to generate a tridimensional model in a virtual space of the pack-arrangement station 10 and to display the same model on the display 43a of the user interface stage 43, reproducing all the operations of the same pack-arrangement station 10 for the formation of the pack-arrangement pattern.

During the reproduction, possible errors or anomalies are highlighted (e.g. with a different color or with particular visual indicators) and the simulation is stopped in order for the operator to get a clear visual depiction of the same errors.

In this regard, and purely by way of example, Figure 9 shows the visual representation of the virtual model of the pack-arrangement station 10, where an error, in particular a collision between packs 4, is highlighted.

The second functional module 41b, as shown at block 65, is configured to generate alerts for the operator's attention, during and/or at the end of the simulation, pointing out errors or anomalies identified during the simulation of the operations of the pack-arrangement station 10 for the formation of the new pack-arrangement pattern.

According to a further aspect of the present solution, as shown at block 66, the second functional module 41b may also be configured to compare the actual operating performance of the pack-arrangement station 10 (e.g. with respect to an actual movement flow of the packs 4 along the line), with a target or expected operating performance.

The second functional module 41b is capable of determining the operating performance of the pack-arrangement station 10 with a high accuracy, thanks to the implementation of the digital twin thereof, as previously discussed.

The actual and target operating performances may be visually represented on the display 43a of the user interface stage 43 to provide indications relating to any possible deviation of the actual performance from the target performance. The evolution in time of this deviation may also be determined and displayed.

For example, in case of jams or collisions of packs at the palletizer infeed, the operator is supported to understand possible wrong pack positioning. In other words, the automated system 40 supports the operator in comparing the actual performance with the target, expected, pack positioning, for a fast issue resolution. Also, the trend, time evolution, of the deviation allows the operator to have a better understanding of any possible issue.

According to a particular aspect of the present solution, as shown at block 67, the second functional module 41b is also configured to determine possible corrective actions in order to solve the anomalies or errors identified during the simulation and/or to improve the performance of the pack-arrangement operations.

In this regard, the processing unit 41 may be configured to determine the performance of the pack-arrangement station 10 with the new pack-arrangement pattern, e.g. in terms of its operating speed being calculated e.g. in packs/min, layers/min and/or pallets/h (again, it is underlined the accuracy with which it is possible to determine the performance parameters thanks to the simulation of the operation of the pack-arrangement station 10).

The same processing unit 41 may be also configured to determine an optimized set-up of the pack-arrangement station 10, to improve its performance or throughput in the formation of the new pack-arrangement pattern. In particular, the processing unit 41 may be configured to determine possible changes to the operating parameters and configuration of the pack-arrangement station 10.

Thanks to the digital twin simulation, the processing unit 41 is configured for example to calculate a maximum speed at which the pack-arrangement station 10 can operate without errors occurring in the pack-arrangement operations, the speed being calculated e.g. in packs/min, layers/min and/or pallets/h.

The same second functional module 41b may be configured, based on the corrective actions, to automatically implement changes to the pack-arrangement pattern and/or to the operating parameters of the pack-arrangement station 10; or to suggest such changes to the operator.

Purely by way of example, possible corrective actions may include: a change in the arrangement of the packs 4 in the pallet layers (thus a modification of the pack-arrangement pattern generated by the first functional module 41a); a modification of the operating parameters of the pack-arrangement station 10, e.g. of the speed of the first and/or second conveyors 14, 16; a modification of the distance between the packs 4 guided along the same first and/or second conveyors 14, 16; a modification of the distance between the handling robots 19, etc.

The second functional module 41b may be configured to repeat the simulation of the operation of the pack-arrangement station 10, by means of the digital twin of the same pack-arrangement station 10, in order to verify the absence of residual anomalies or errors.

According to a possible embodiment, the processing unit 41 is then configured, as shown at block 68, to generate set-up data to be transmitted, through the PLC interface stage 44, to the controller 30 of the pack-arrangement station 10, in order to implement the new pack-arrangement pattern.

Upon receiving the set-up data, the controller 30 may automatically execute, without any required intervention by the operator and expert personnel, all adjustments and settings requested; in other words, the pack-arrangement station 10, according to the setting data provided by the automated system 40, is able to carry out a self-configuration to implement the new pack-arrangement pattern (with any required modification to the setting of the pack-arrangement station 10).

The set-up data may also be stored in the PLC data memory 45 by the processing unit 41.

It is noted that the set-up data transmitted from the processing unit 41 to the controller 30 may advantageously take into account all the corrective actions determined by means of the simulation.

In more details, the processing unit 41 sends, by way of the PLC interface stage 44, configuration data to the controller 30, so that the same controller 30 provides suitable commands to the constituent elements of the pack-arrangement station 10, in order to automatically set the desired pack-arrangement pattern.

Some of the parameters that may be set by the controller 30 in response to the set-up data received, are listed below, in association with each location of the pack-arrangement station 10:
- receiving station 13: speed of the first conveyor 14 (according to the required production rate); position of the handling guides 15 (according to the dimensions of the packs 4 to be handled); number of bundles constituting the single pack 4; spacing between the packs 4; spacing between consecutive layers 3;
- handling station 17: identifier of the handling module 18 which has to handle the single packs 4; rotation and translation that have to be performed; handling position assumed by the pack 4 on the second conveyor 16; speed of the second conveyor 16; position of the guides;
- storage station 20: position and movements that have to be executed by the compacting actuators 21 (according to the layer size, in top view);
- output station 26: trajectories to be followed by the handling modules 27; speed of the output conveyor 28; number of separation flaps to be inserted between the layers 3.

During execution of the pack-arrangement operations, the situation may arise, in which manual setting operations of some operating parameters of the pack-arrangement station 10 are required from the operator, or some of the parameters are automatically changed by the controller 30.

In general, any change to the configuration parameters and the operational parameters of the pack-arrangement station 10, occurring during operation (for example, due to manual interventions by the operator or to commands received from other stations of the packaging plant), involves the transfer of information and update data from the controller 30 to the processing unit 41, thus enabling automatic synchronization of data available to the controller 30 and to the same processing unit 41. In this way, there is a constant self-alignment of the stored data, available to the controller 30 and to the processing unit 41.

From the analysis of the characteristics of the described system, the advantages that it allows to obtain are evident.

In particular, the automated system 40 allows the automated configuration of pack-arrangement patterns, e.g. the configuration and automated formation of loading groups 1 on pallets 2, optimizing criteria such as density and compactness in filling of the layers 3 by the loading units 4.

The solution described allows format change in the pack-arrangement station 10, in an automated, simple and rapid manner, avoiding errors in definition of the operating parameters and generally optimizing the pack-arrangement operations.

In particular, the present solution not only allows to define an optimized pack arrangement but also to check it feasibility in the real machine, determining any required changes to the set-up of the pack-arranging station 10. Optimization of the performance of the same pack-arrangement station 10 may also be automatically achieved.

Moreover, the simulated "digital win" implemented by the second functional module 41b allows the operator to have, at any time, an overview of the simulated operation and performance of the pack-arrangement station 10. This helps in solving any possible issues when errors or deviations occur in the operation of the real machine, the operator being facilitated in understanding and solving of the same issues.

The solution described may advantageously be performed both at the operator panel 32 of the pack-arrangement station 10, and remotely, with the possibility of transferring the processed configuration data to the controller 30 of the pack-arrangement station 10 with any known technique of data transmission.

Moreover, it is clear that modifications and variations may be applied to the system described and shown, without departing from the scope of the appended claims.

In particular, it is underlined that the disclosed solution can be advantageously applied for different pack arrangement operations, also including de-palletizing operations, consisting in the process of unloading pallets of packs and orderly placing the same packs on a conveyor belt or other predefined place.

In particular, in this case, the first functional module 41a may be configured to assist the operator in the creation or modification of an ordered pattern of packs 4 once they are taken from the pallet 2; and the second functional module 41b may again be configured to implement a virtual simulation of the pack-arrangement station 10 (by means of the "digital twin" thereof), in this case being configured to execute de-palletizing operations, in order to check the consistency and feasibility of the pack-arrangement pattern generated by the first module 41a (as previously discussed in detail).

Furthermore, it is clear that the data and the parameters that have been described by way of example do not exhaustively represent the intervention and processing possibilities of the automated system.

It is equally evident that the automated system described is advantageously applied to pack-arrangement stations 10 (e.g. palletizing/de-palletizing stations), having a configuration and structural elements different from what has been described above by way of example.

## Claims

1. An automated system (40) for management of pack-arrangement operations in a pack-arrangement station (10) of a container packaging plant, comprising a processing unit (41) and a user interface stage (43), the processing unit (41) including:
a first functional module (41a), configured to assist an operator, via the user interface stage (43), in the generation of a new pack-arrangement pattern to be implemented in the pack-arrangement station (10); and
a second functional module (41b), configured to implement a virtual simulation of the operation of the pack-arrangement station (10), in order to verify the feasibility in the pack-arrangement station (10) of the new pack-arrangement pattern received from the first functional module (41a) and to automatically determine a set-up of the pack-arrangement station (10) corresponding to the new pack-arrangement pattern.

2. The system according to claim 1, wherein the second functional module (41b) is configured, by means of said virtual simulation, to identify possible problems or errors associated with said new pack-arrangement pattern; and determine possible corrective actions in said new pack-arrangement pattern and/or in the setup of the pack-arrangement station (10) to solve said problems or errors.

3. The system according to claim 1 or 2, wherein the second functional module (41b) is configured to: determine a performance of the pack-arrangement station (10) in the implementation of the new pack-arrangement pattern; and determine possible corrective actions in said new pack-arrangement pattern and/or in the set-up of the pack-arrangement station (10) to improve the performance of the pack-arrangement station (10).

4. The system according to any of claims 1-3, wherein the second functional module (41b) is configured to generate a digital twin of the pack-arrangement station (10) and to simulate the operations performed by the same pack-arrangement station (10) for the generation of the new pack-arrangement pattern, based on the characteristics of said new pack-arrangement pattern and the parameters and characteristic of the pack-arrangement station (10).

5. The system according to claim 4, wherein the pack-arrangement station (10) includes a number of functional elements cooperating in the implementation of the new pack arrangement pattern; and the second functional module (41b) is configured to: assign to each functional element of the pack-arrangement station (10) a dynamic working area, representative of an extent of movement of the same functional element during pack-arrangement operations; and to detect possible interference and/or collisions between functional elements of the pack-arrangement station (10) and/or between packs (4) and/or between the packs (4) and the functional elements of the pack-arrangement station (10).

6. The system according to claim 4 or 5, wherein the user interface stage (43) is provided with a display (43a); and the second functional module (41b) is configured to generate a tridimensional model in a virtual space of the pack-arrangement station (10) and to display the same model on the display (43a) of the user interface stage (42), reproducing the operations of the pack-arrangement station (10) for the implementation of the pack-arrangement pattern; and wherein the second functional module (41b) is configured to highlight in said tridimensional model possible problems or errors associated with said new pack-arrangement pattern.

7. The system according to any of claims 4-6, wherein the second functional module (41b) is configured to provide the operator, via the user interface stage (43), with an overview of the operation of the a digital twin of the pack-arrangement station (10), any time during the simulation.

8. The system according to any of claims 2-7, wherein the second functional module (41b) is configured to generate alerts via the user interface stage (43), during and/or at the end of the simulation, associated with the problems or errors identified during the simulation of the operations of the pack-arrangement station (10) for the implementation of the new pack-arrangement pattern.

9. The system according to any of the preceding claims, wherein the second functional module (41b) is configured to compare an operating performance of the virtually-simulated pack-arrangement station (10) in the implementation of the new pack-arrangement pattern with a target operating performance.

10. The system according to claim 9, wherein the second functional module (41b) is configured to determine an evolution in time of possible deviations between the operating performance of the virtually-simulated pack-arrangement station (10) and the target operating performance.

11. The system according to any of the preceding claims, further comprising an interface stage (44) configured to interface with a controller (30) of the pack-arrangement station (10); wherein the second functional module (41b) is configured to generate set-up data to be transmitted, through the interface stage (44), to the controller (30) of the pack-arrangement station (10), for the implementation of the new pack-arrangement pattern.

12. The system according to any of the preceding claims, designed to aid configuration and formation of a loading group (1) on a pallet (2) constituted by a stack of layers (3) of packs (4), the pack-arrangement station (10) being a palletizing station (10); wherein the first functional module (41a) is configured to: control the user interface stage (43) to provide a user interface for definition, by an operator, of desired configuration parameters for said loading group (1); and define an optimized configuration of said loading group (1), based on said desired configuration parameters.

13. The system according to claim 12, wherein the first functional module (41a) is configured to perform an automated procedure for composition of the layers (3), such as to optimize the density and compactness of the loading group (1), leading to definition and generation of said new pack-arrangement pattern.

14. The system according to claim 12 or 13, wherein the pack-arrangement station (10) comprises: a receiving station (13), which is fed with packs (4) advancing on a conveyor (14, 16); a handling station (17), having a plurality of handling modules (18) to order the packs (4) advancing on the conveyor (14, 16), each handling module (18) configured to grasp a respective pack (4), and to move the pack (4) with translations along one or more axes (A, B) and/or rotations to suitably arrange the packs (4); an accumulation station (20), wherein the packs (4) are compacted to form ordered layers (3) of the loading group (1) on the pallet (2); and an output station (26), provided with one or more output handling modules (27), configured to pick up the ordered layers (3) and to carry them on the pallet (2) arranged on an output conveyor (28).

15. The system according to any of the preceding claims, configured to be installed: at an operator panel (32) of said pack-arrangement station (10), operatively coupled to a controller (30) of said pack-arrangement station (10); or at a remote location, at a distance with respect to said pack-arrangement station (10) and to said controller (30).

16. A pack-arrangement station (10) for a container packaging plant, comprising an automated system (40) for managing pack-arrangement operations, according any one of the preceding claims.

17. A computer program product, configured to be executed by a processing unit (41) of an automated system (40) for managing pack-arrangement operations in a pack-arrangement station (10) of a container packaging plant, according to any of claims 1-15.
